# EUROPEAN PATENT APPLICATION

(11) **EP 1 427 161 A2**
(43) Date of publication of application: **09.06.2004**
(21) Application number: 03026876.7
(22) Date of filing: 24.11.2003
(51) Int. Cl.: H04L 29/06

(54) **Apparatus and method for controlling communication with a mobile node**

(30) Priority: 03.12.2002 JP 2002351428
(71) Applicant: Kabushiki Kaisha Toshiba, Tokyo (JP)
(72) Inventor: Watanabe, Isao, Toshiba Corporation, Tokyo 105-8001 (JP)
(74) Representative: Henkel, Feiler & Hänzel

(57) **Abstract**

A communication control apparatus (101) forwards a communication request, which is directed to a home address of a mobile node (21) and is transmitted from another node via a network, to the network segment to which the mobile node (21) is currently connected. The apparatus (101) includes a unit configured to store event information indicative of occurrence of the communication request from the another node to the mobile node (21), when the communication request is received in a state in which the mobile node (21) is not connected to the network, and an informing unit configured to executes, based on the stored event information, a process for informing the another node via the network that the mobile node (21) has become communicable, in response to a registration request for registration of the care-of-address, which is transmitted via the network from the mobile node connected to the network segment.

## Description

The present invention relates to an apparatus and a method for controlling communication with a mobile node, and more particularly to an apparatus and a method for forwarding a communication request, which is directed to a home address of a mobile node, to a network segment to which the mobile node is currently connected.

In recent years, a variety of types of mobile nodes, such as a notebook portable computer, a PDA (Personal Digital Assistants) and a mobile phone, have been developed. Mobile IP (IP: Internet Protocol) is known as technology for mobile communications using an Internet protocol (IP).

Mobile IP is a protocol designed to enable the use of the same IP address at all times for communication of a mobile node, regardless of a change in actual location on the network to which the mobile node is currently connected.

In Mobile IP, a "home agent" is used. The home agent receives packets directed to the home address allocated to the mobile node and forwards the packets to a network segment at a destination of movement, to which the mobile node is currently connected.

By virtue of the packet forwarding function of the home agent, the mobile node can receive packets, which are transmitted to the home address of the mobile node from another node, even in a case where the mobile node is connected to a network segment at a destination of movement, such as a public wireless access point.

However, in the state in which the mobile node is not connected to the network, the mobile node is unable to receive packets transmitted from another node. Such packets transmitted from another node are discarded.

Jpn. Pat. Appln. KOKAI Publication No. 2001-358776 (page 5) discloses one of techniques for preventing occurrence of such discarding of packets. That is, this document discloses a system for accumulating in a home agent a service notice message sent from the server to the mobile node. In this system, when the mobile node is connected to the network, a service notice message accumulated in the home agent is sent from the home agent to the mobile node.

In the meantime, attention has recently been paid to VoIP (Voice over IP) technology, which enables voice communications over an IP network.

A combination of the VoIP technology and mobile IP technology enables the mobile node to receive a call from a node at the other end even when the mobile node is connected to a network segment at a destination of movement.

Voice communications presuppose bi-directional communications between nodes. In order to perform voice communications, it is required that both nodes are connected to the network. However, the mobile node is not always connected to the network. It is thus required to realize a technique for enhancing the feasibility of bidirectional communications between a mobile node and another node.

The object of the present invention is to provide a communication control apparatus and a communication control method capable of directional communications between a mobile node and another node.

According to an embodiment of the present invention, there is provided a communication control apparatus for forwarding a communication request, which is transmitted from another node via a network and directed to a home address of a mobile node, to a network segment to which the mobile node is currently connected, based on a relationship between the home address and a care-of-address used in the network segment, comprising: a unit configured to store event information indicative of occurrence of the communication request from the another node to the mobile node, when the communication request is received in a state in which the mobile node is not connected to the network; and a unit configured to executes, based on the stored event information, a process for informing the another node via the network that the mobile node has become communicable, in response to a registration request for registration of the care-of-address, which is transmitted via the network from the mobile node connected to the network segment.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the configuration of a network system including a home agent according to an embodiment of the present invention;
FIG. 2 is a view for explaining a packet forwarding process executed by the home agent shown in FIG. 1;
FIG. 3 is a view for explaining a binding list table and a fixed registration list table provided in the home agent shown in FIG. 1;
FIG. 4 is a block diagram showing the structure of the home agent shown in FIG. 1;
FIG. 5 is a block diagram showing another example of the structure of the home agent shown in FIG. 1;
FIG. 6 shows a relationship between a state notice program provided in the home agent shown in FIG. 1 and an indicator program provided in the node;
FIG. 7 is a flow chart illustrating procedures of a packet forwarding process and a communication request registration process executed by the home agent shown in FIG. 1;
FIG. 8 is a flow chart illustrating procedures of a state notice process executed by the home agent shown in FIG. 1;
FIG. 9 shows the relationship in execution timing between a validity check process and a state notice process executed by the home agent shown in FIG. 1;
FIG. 10 is a flow chart illustrating procedures of a process executed by the indicator program shown in FIG. 6; and
FIG. 11 shows an example of an absence notice list managed by the indicator program shown in FIG. 6.

An embodiment of the present invention will now be described with reference to the accompanying drawings.

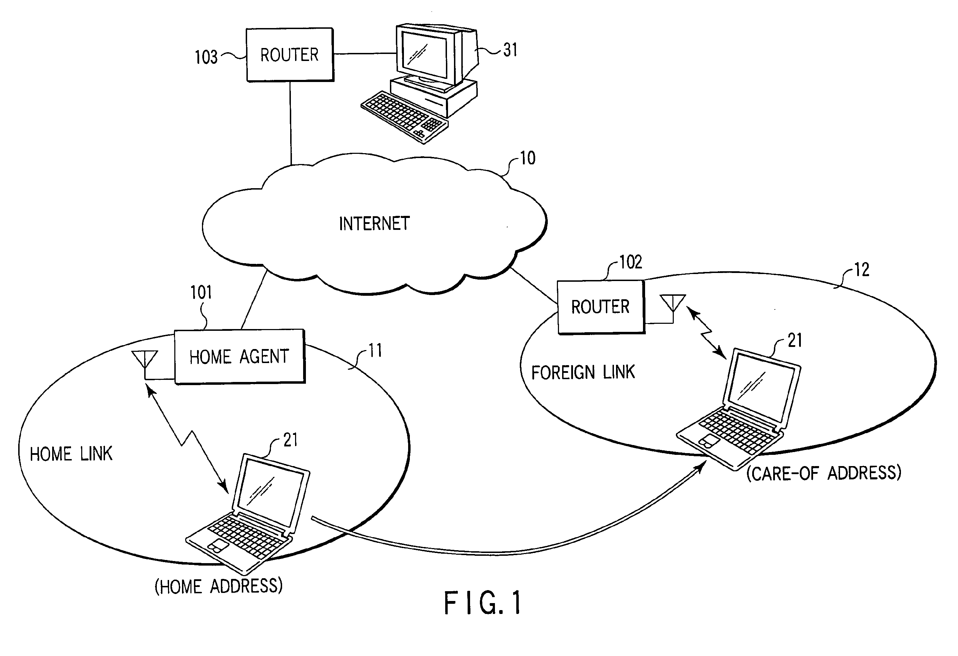

FIG. 1 shows the configuration of a network system according to an embodiment of the invention. This network system is a network system that uses Internet protocol (IP), and performs communications via the Internet 10.

This network system employs mobile IP technology (Mobile IPv4 or Mobile IPv6) that enables a mobile node to use the same IP address, irrespective of a variation in actual position on the network where the mobile node is present.

Network segments 11 and 12 are connected to the Internet 10. The network segment 11 is a network segment that is used by a mobile node 21 as a home location. The network segment 11 is called "home link" or "home network". A home agent 101 is provided in the network segment 11. The network segment 11 is connected to the Internet 10 via the home agent 101. The network segment 11 comprises a wireless LAN, for instance.

The mobile node 21 comprises a mobile terminal such as a notebook type portable computer, a PDA (Personal Digital Assistant) or a mobile phone. The mobile node 21 has a wireless communication function and can execute wireless communication with the home agent 101. Further, the mobile node 21 is equipped with an application program for voice communications using VoIP (Voice over IP).

The network segment 12 is a network segment located at a destination of movement of the mobile node 21. When the mobile node 21 is moved, it can be connected to the network segment 12, where necessary. The network segment 12 is called "foreign link" or "foreign network". The network segment 12 is provided with a router 102. The network segment 12 is connected to the Internet 10 via the router 102. The network segment 12 comprises a wireless LAN installed at a public wireless access point, for example.

A node 31 is connected to the Internet 10 via a router 103. The node 31 comprises a fixed node or a mobile node. By using an IP, the node 31 can communicate with the mobile node 21 via the Internet 10. Further, the node 31 includes an application program for voice communications using VoIP (Voice over IP).

The home agent 101 is a communication control device for controlling communications with the mobile node 21. Using Mobile IPv4 or Mobile IPv6, the home agent 101 controls communications with the mobile node 21. The home agent 101 is realized by a router that connects the network segment 11 and Internet 10. In the description below, Mobile IPv6 is used by way of example.

The home agent 101 manages a home address allocated to the mobile node 21 and a care-of-address used in the network segment 12 at a destination of movement, to which the mobile node 21 is currently connected.

The home address is a global IP address that is permanently used by the mobile node 21. The home address comprises, for example, a network prefix portion indicative of a path to the network segment 11, which is the home location of the mobile node 21, and an ID portion inherent to the mobile node 21.

The care-of-address is an IP address used in the network segment 12 at the destination of movement, to which the mobile node 21 is currently connected. In Mobile IPv6, the care-of-address is also a global IP address. The care-of-address comprises, for example, a network prefix portion indicative of a path to the network segment 12 at the destination of movement and an ID portion inherent to the mobile node 21. The network prefix portion is broadcast to the mobile node 21 from the router 102 provided in the network segment 12. When the mobile node 21 is connected to the network segment 12, the mobile node 21 automatically generates a care-of-address to be used in the network segment 12 on the basis of the network prefix portion broadcast from the router 102 and its own ID. Of course, the router 102 may allocate the care-of-address to the mobile node 21.

The home agent 101 manages the relationship between the home address and the care-of-address, thereby recognizing to which network segment the mobile node 21 is currently connected, that is, which care-of-address the mobile node 21 currently uses.

In a time period in which the mobile node 21 is being connected to the network segment 12, the home agent 101 receives, in place of the mobile node 21, packets which are transmitted from another node (e.g. node 31) via the Internet 10 and directed to the home address of the mobile node 21, and the home agent 101 forwards the received packets to the network segment 21 where the mobile node 21 is present.

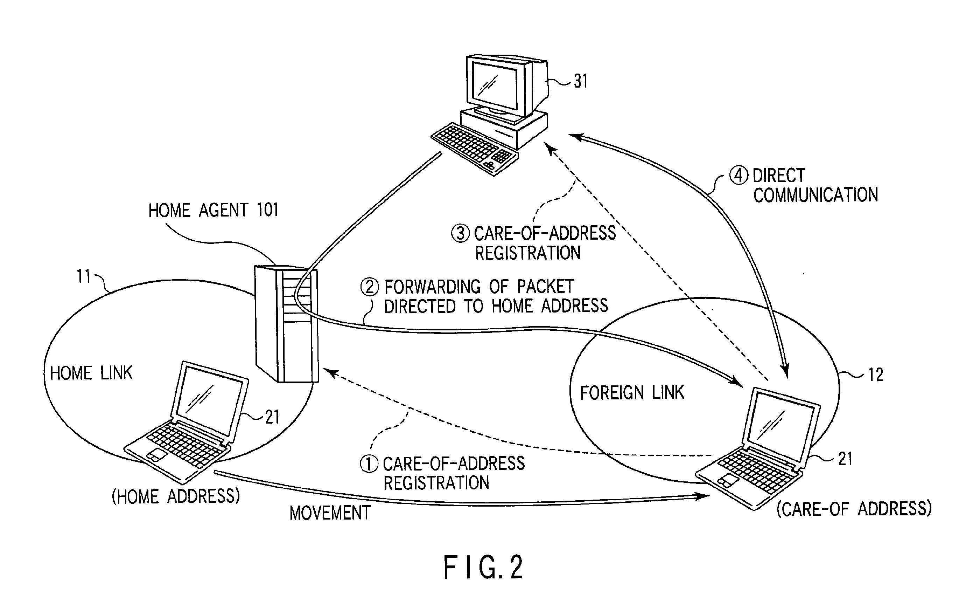

A packet forwarding process scheme using Mobile IPv6 is described referring to FIG. 2.

### (1) Care-of-address registration

The mobile node 21 moves from the network segment 11 to the network segment 12. The mobile node 21 first obtains a care-of-address to be used in the network segment 12. Then, the mobile node 21 sends a request for registration of the care-of-address to the home agent 101. The home agent 101 associates (i.e. binds) the home address of the mobile node 21 with the care-of-address designated by the registration request.

### (2) Forwarding of packets directed to home address

The node 31 transmits a packet including a communication request to the home address of the mobile node 21. This packet is received by the home agent 101. The home agent 101 forwards the received packet to the care-of-address corresponding to the home address. Thereby, the packet reaches the mobile node 21 that is present in the network segment 12.

### (3) Care-of-address registration

The mobile node 21 sends a care-of-address registration request to the node 31 that has transmitted the packet including the communication request.

### (4) Direct communication

The node 31 recognizes the care-of-address of the mobile node 21. Thereby, direct communication can be executed hereafter between the node 31 and mobile node 21.

It is possible that packet forwarding from the node 31 to the mobile node 21 is always executed via the home agent 101, and only packet transfer from the mobile node 21 to the node 31 is directly executed without intervention of the home agent 101. In this case, the node 31 need not recognize the care-of-address of the mobile node 21, and so the process (3) can be omitted.

In this embodiment, the home agent 101 includes, in addition to the packet forwarding process function, a state notice function for enhancing the feasibility of bidirectional communications, such as voice communications, between the mobile node 21 and another node.

This state notice function is a function for informing another node, which has sent a communication request to the mobile node 21 in the state in which the mobile node 21 is connected to none of the network segments, of the fact that the mobile node 21 has become communicable.

The mobile node 21 is movable from the network segment 11 to the network segment 12. While the mobile node 21 is moving, the mobile node 21 is not connected to the Internet 10. That is, the mobile node 21 is connected neither to the network segment 11 nor the network segment 12. In this state, there is a possibility that the node 31 may send a communication request to the home address of the mobile node 21.

When the home agent 101 receives a communication request which has been sent from the node 31 and directed to the home address of the mobile node 21, the home agent 101 retains event information indicative of the fact that the communication request from the node 31 to the mobile node 21 has occurred. Thereafter, if the mobile node 21 is connected to the network segment 12 at the destination of movement, the mobile node 21 sends a care-of-address registration request to the home agent 101.

Upon receiving the care-of-address registration request, the home agent 101 recognizes that the mobile node 21 has become communicable. Then, based on the retained event information, the home agent 101 informs the node 31 that the mobile node 21 has become communicable.

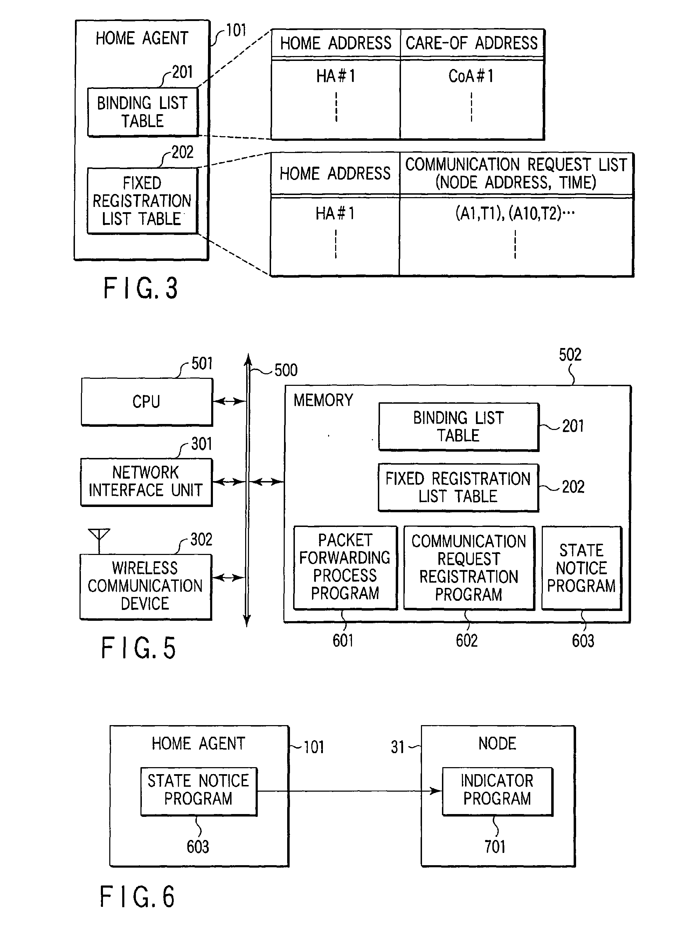

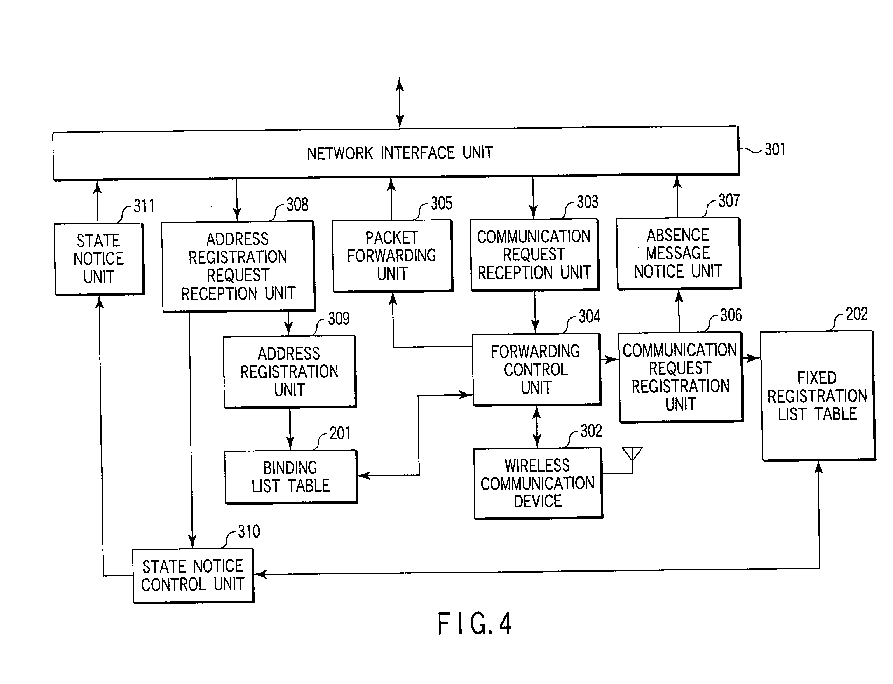

Referring now to FIG. 3, two tables provided in the home agent 101 are described.

As is shown in FIG. 3, the home agent 101 includes a binding list table 201 and a fixed registration list table 202.

The binding list table 201 is a table for storing the home address of each of mobile nodes managed by the home agent 101 and a current care-of-address of the mobile node in an associated manner.

In response to an address registration request from the mobile node 21, the home agent 101 stores, in the binding list table 201, address information indicative of the relationship in correspondency between the home address of the mobile node 21 and the care-of-address. If the home address of the mobile node 21 is "HA#1" and the care-of-address designated by the address registration request is "CoA#1", a pair comprising "HA#1" and "CoA#1" is stored as address information in the binding list table 201, as shown in FIG. 3. Each time the address registration request is sent from the mobile node 21, the home agent 101 updates the content of the address information corresponding to the mobile node 21. When the mobile node 21 is connected to the network segment 11, the address information corresponding to the mobile node 21 is deleted from the binding list table 201. Similarly, when the home agent 101 detects that the mobile node 21 is connected to none of the network segments, the address information corresponding to the mobile node 21 is deleted from the binding list table 201.

The fixed registration list table 202 is a table for storing communication requests. The fixed registration list table 202 has a plurality of entries for registering communication requests corresponding to mobile nodes managed by the home agent 101. In each entry, a home address field indicative of the home address of the mobile node and a communication request list for storing event information indicative of the occurrence of a communication request from another node to this mobile node are defined.

The home address of the mobile node registered in the home address field is not deleted even when the mobile node is not connected to the network.

An operation for storing a communication request to the mobile node 21 in the fixed registration list table 202 will now be described. The home address "HA#1" of the mobile node 21 is already registered in the address field of the fixed registration list table 202. In a time period in which the mobile node 21 is connected to none of the network segments, each time the home agent 101 receives a communication request directed to the home address "HA#1" from another node, the home agent 101 additionally registers event information corresponding to the communication request in the communication request list corresponding to the home address "HA#1".

The event information includes an IP address of the node that has transmitted the communication request, and a time at which the communication request has been received by the home agent 101. For example, when the home agent 101 receives the communication request that is directed to the home address "HA#1" and transmitted from the node with IP address "A1", a pair comprising address "A1" of the node that has transmitted the communication request and time "T1" at which the communication request has been received is stored as event information in the communication request list corresponding to the home address "HA#1".

Using the fixed registration list table 202, the home agent 101 can perform management as to which node has transmitted a communication request to which mobile node, and when it has been transmitted.

Referring to FIG. 4, the structure of the home agent 101 is described.

In addition to the aforementioned binding list table 201 and fixed registration list table 202, the home agent 101 comprises, as shown in FIG. 4, a network interface unit 301, a wireless communication device 302, a communication request reception unit 303, a forwarding control unit 304, a packet forwarding unit 305, a communication request registration unit 306, an absence message notice unit 307, an address registration request reception unit 308, an address registration unit 309, a state notice control unit 310, and a state notice unit 311. These units are realized by hardware.

The network interface unit 301 is a device for controlling packet transfer between the Internet 10 and home agent 101. The wireless communication device 302 is a device that effects wireless communications with the mobile node 21 present within the network segment 11.

The communication request reception unit 303 is a device that receives a packet including a communication request directed to the home address of the mobile node 21, which is sent from another node via the Internet 10. That is, the reception unit 303 receives the packet including the home address of the mobile node 21 as a destination address. The communication request received by the reception unit 303 is sent to the forwarding control unit 304.

The forwarding control unit 304 is a device for determining a forwarding destination of the received communication request. Referring to the binding list table 201, the forwarding control unit 304 determines in which network segment the mobile node 21 is currently present. The packet forwarding unit 305 is a device that executes, under control of the forwarding control unit 304, a process for forwarding the communication request to a network segment other than the network segment 11. If the mobile node 21 is connected to the network segment 12, the received communication request directed to the home address of the mobile node 21 is delivered from the forwarding control unit 304 to the packet forwarding unit 305. The packet forwarding unit 305 forwards the received communication request to the care-of-address used by the mobile node 21 within the network segment 12. The care-of-address is registered in the binding list table 201.

If the mobile node 21 is present within the network segment 11, the received communication request directed to the home address of the mobile node 21 is delivered from the forwarding control unit 304 to the wireless communication device 302. The wireless communication device 302 wirelessly transmits the communication request to the home address of the mobile node 21.

If the mobile node 21 is connected to none of the network segments, the received communication request directed to the home address of the mobile node 21 is delivered from the forwarding control unit 304 to the communication request registration unit 306. The communication request registration unit 306 is a device that stores, in the fixed registration list table 202, the event information indicative of the occurrence of the communication request directed to the home address of the mobile node 21. The absence message notice unit 307 is configured to send an absence notice message to the node that has transmitted the communication request directed to the home address of the mobile node 21. The absence notice message indicates that the mobile node 21 is currently connected to none of the network segments and that when the mobile node 21 becomes communicable, this fact is to be noticed.

The address registration request reception unit 308 is a device that receives a care-of-address registration request sent from the mobile node 21 via the Internet 10. The registration request received by the address registration request reception unit 308 is delivered to the address registration unit 309 and the state notice control unit 310.

The address registration unit 309 is a device that stores, in the binding list table 201, address information indicative of the relationship in correspondency between the home address of the mobile node 21 and the care-of-address designated by the registration request.

The state notice control unit 310 is configured to search event information associated with the mobile node 21 from the fixed registration list table 202, thereby determining whether a communication request to the mobile node 21 has occurred during a time period in which the mobile node 21 is not connected to the network. If event information associated with the mobile node 21 is stored in the fixed registration list table 202, the event information is delivered from the state notice control unit 310 to the state notice unit 311. The state notice unit 311 is a device that executes a process for informing, based on the event information, the node, which has transmitted the communication request to the mobile node 21, that the mobile node 21 has become communicable.

These units may be realized by software executed by a CPU (Central Processing Unit) in the home agent 101. In this case, the home agent 101 is configured as shown in FIG. 5.

As is shown in FIG. 5, the home agent 101 comprises a bus 500, a CPU 501, a memory 502, the aforementioned network interface 301, and the aforementioned wireless communication device 302.

The CPU 501 is a processor that controls the operations of the home agent 101, and executes various programs stored in the memory 502. The memory 502 stores the aforementioned binding list table 201 and fixed registration list table 202.

The memory 502 further stores a packet forwarding process program 601, a communication request registration program 602, and a state notice program 603.

The packet forwarding process program 601 is a program for causing the home agent 101 to execute the above-described packet forwarding process according to Mobile IPv6. The packet forwarding process program 601 executes a process corresponding to the operations of the communication request reception unit 303, forwarding control unit 304, packet forwarding unit 305, address registration request reception unit 308 and address registration unit 309, which have been described referring to FIG. 4.

The communication request registration program 602 is a program that executes a communication request registration process for storing, in the fixed registration list table 202, a communication request as event information, which is received from another node 31 during a time period in which the mobile node 21 is not connected to the network. The communication request registration program 602 executes a process corresponding to the operations of the communication request registration unit 306 and absence message notice unit 307, which have been described referring to FIG. 4.

The state notice program 603 is a program that executes a process for informing, based on the event information registered in the fixed registration list table 202, the node, which has transmitted the communication request to the mobile node 21, that the mobile node 21 has become communicable. The state notice program 603 executes a process corresponding to the operations of the state notice control unit 310 and state notice unit 311, which have been described referring to FIG. 4.

As is shown in FIG. 6, an indicator program 701 is installed in the node 31. The indicator program 701 is a program that executes a process for informing the user of the content of a notice sent from the state notice program 603 of the home agent 101. The user of the node 31, which has sent the communication request to the mobile node 21, can recognize that the mobile node 21 has become communicable through the indicator program 701.

The indicator program 701 has a function of storing, as an absence notice record, the absence notice message sent from the home agent 101.

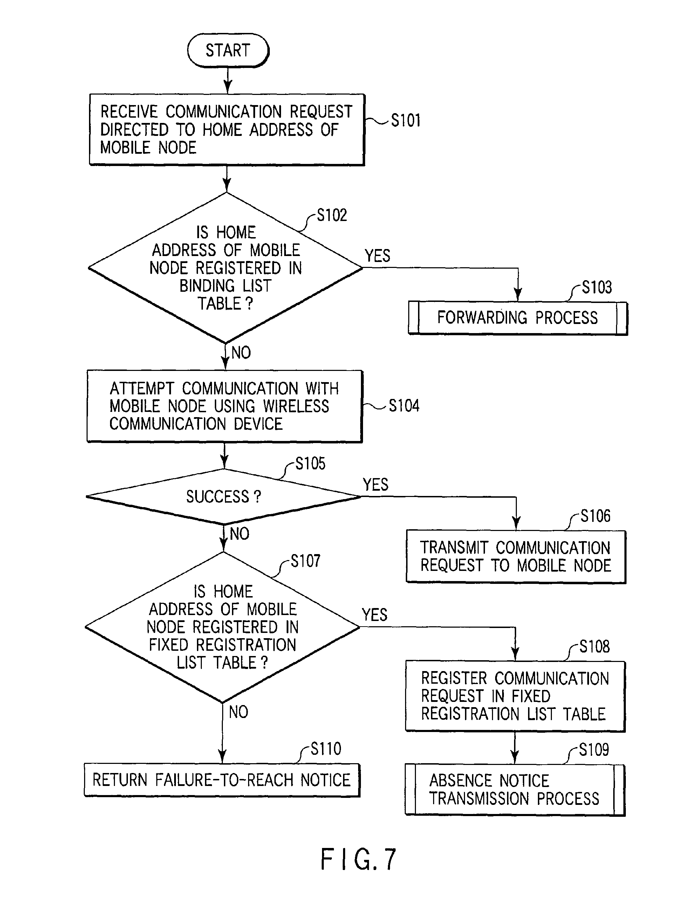

Referring now to a flow chart of FIG. 7, a description is given of the procedures of the packet forwarding process and communication request registration process executed by the CPU 501 of home agent 101 with use of the packet forwarding process program 601 and communication request registration program 602.

The description below is directed to the case where a VoIP application program executed by the node 31 transmits a communication request for voice communications to a VoIP application program executed by the mobile node 21.

The CPU 501 receives via the network interface unit 301 a communication request that is transmitted from the node 31 via the Internet 10 and directed to the home address of the mobile node 21 (step S101). Upon receiving the communication request, the CPU 501 refers to the binding list table 201 and determines whether address information including the home address of the mobile node 21 is stored in the binding list table 201 (step S102).

If address information including the home address of the mobile node 21 is stored in the binding list table 201 (YES in step S102), the CPU 501 executes a process for forwarding the received communication request to the care-of-address designated by the address information (step S103).

If address information including the home address of the mobile node 21 is not stored in the binding list table 201 (NO in step S102), the CPU 501 attempts to make communication with the mobile node 21 using the wireless communication device 302, thereby to determine whether the mobile node 21 is present within the network segment 11 (step S104).

If the CPU 501 successfully communicates with the mobile node 21 (YES in step S105), the CPU 501 determines that the mobile node 21 is present within the network segment 11, and transmits the received communication request to the home address of the mobile node 21, using the wireless communication device 302 (step S106).

If the CPU 501 fails to communicate with the mobile node 21 (NO in step S105), the CPU 501 determines that the mobile node 21 is currently connected to none of the network segments, and activates the communication request registration program 602. Then, the CPU 501 determines whether the home address of the mobile node 21 is registered in the address field of the fixed registration list table 202 (step S107).

If the home address of the mobile node 21 is registered in the address field of the fixed registration list table 202 (YES in step S107), the CPU 501 stores, in the fixed registration list table 202, the address of the node 31 that has sent the communication request and the time of reception of the communication request as event information (step S108). Then, the CPU 501 transmits an absence notice message to the node 31 via the network interface unit 301 (step S109). By the absence notice message, the node 31 recognizes that when the mobile node 21 becomes communicable, the node 31 will be informed of this fact.

If the home address of the mobile node 21 is not registered in the address field of the fixed registration list table 202 (NO in step S107), the CPU 501 transmits to the node 31 via the network interface unit 301 an error message to the effect that the communication request fails to reach the mobile node 21 (step S110).

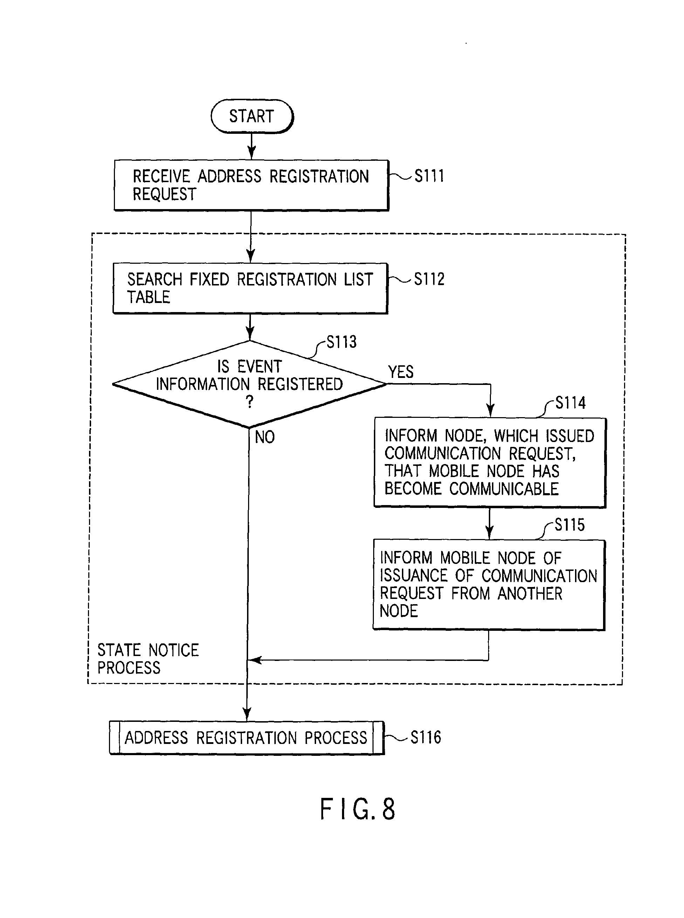

Next, the procedure for the state notice process executed by the CPU 501 is described referring to a flow chart of FIG. 8.

When the mobile node 21 has moved to the network segment 12 at the destination of movement, the mobile node 21 acquires a care-of-address to be used in the network segment 12. The mobile node 21 with the acquired care-of-address transmits an address registration request for the care-of-address to the home agent 101 according to the procedure stipulated in Mobile IPv6.

The CPU 501 of the home agent 101 receives via the network interface 301 the address registration request that is sent from the mobile node 21 over the Internet 10 (step S111). The CPU 501 activates the state notice program 603 and executes the following process.

To begin with, the CPU 501 searches the fixed registration list table 202 and determines whether event information associated with the communication request directed to the mobile node 21 is stored in the fixed registration list table 202 (step S112, S113).

If the event information is stored, the CPU 501 transmits, based on the even information, a packet indicating that the mobile node 21 has become communicable, as a state notice message, to the node 31 that sent the communication request to the mobile node 21 (step S114). The packet includes the home address of the mobile node 21 and the time of the communication request contained in the event information. Further, the CPU 501 transmits to the mobile node 21 a packet indicating that the communication request was sent from the node 31, as a state notice message (step S115). This packet includes the address of the node 31 and the time of the communication request, which are designated in the event information.

Then, the CPU 501 stores, in the binding list table 201, address information indicative of the relationship in correspondency between the care-of-address designated by the address registration request and the home address of the mobile node 21 (step S116).

In the actual operation, before the address information is stored in the binding list table 201, a validity check process for determining whether the address registration request is valid is executed by the CPU 501 according to the procedure stipulated in Mobile IPv6. There may be a case where a relatively long time is needed for the validity check process.

In order to enhance security, the state notice process of steps S112 to S115 in FIG. 8 should be executed after determining that the address registration request is valid. On the other hand, in order to inform the other node more quickly that the mobile node has become communicable, the state notice process of steps S112 to S115 in FIG. 8 should be executed before the validity check process.

In the present embodiment, the timing at which the state notice program 603 is executed can variably be set. Specifically, the CPU 501 has a first state notice mode and a second state notice mode as state notice modes. The CPU 501 executes the state notice process at a timing corresponding to one of the state notice modes, which has been designated by the user (administrator) of the home agent 101.

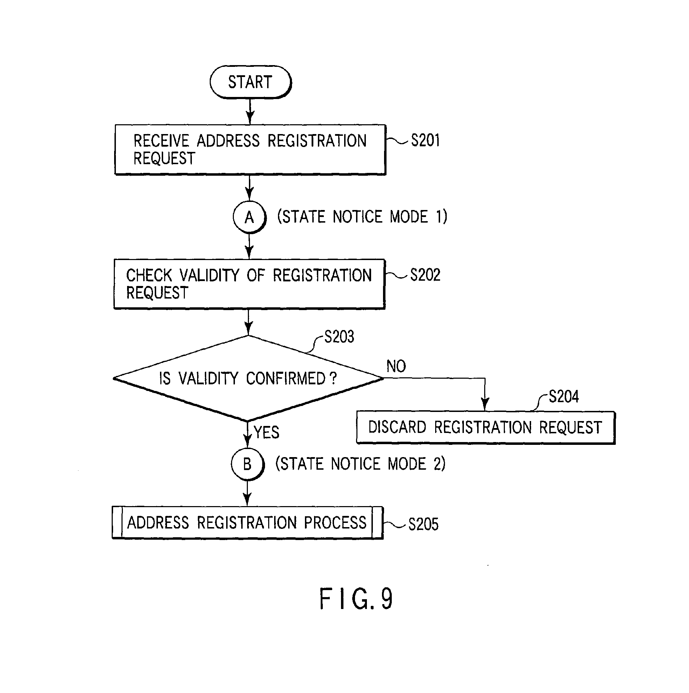

FIG. 9 is a flow chart illustrating the relationship in execution timing between the validity check process and the state notice process.

When the first state notice mode is selected, the state notice process is executed at a timing A in FIG. 9. Specifically, upon receiving the address registration request sent from the mobile node 21 (step S201), the CPU 501 executes the state notice process illustrated in steps S112 to S115 in FIG. 8. Thereafter, the CPU 501 executes the validity check process to determine whether the address registration request is valid (step S202, S203). If it is determined that the address registration request is valid (YES in step S203), the CPU 501 stores, in the binding list table 201, address information indicative of the relationship in correspondency between the care-of-address designated by the address registration request and the home address of the mobile node 21 (step S205). If it is not determined that the address registration request is valid (NO in step S203), the CPU 501 discards the address registration request (step S204).

In the first state notice mode, a state notice may become erroneous if the validity of the address registration request fails to be confirmed in the later process. However, the first state notice mode is advantageous since the state notice process can be executed earlier. In ordinary cases, it is unlikely that the validity fails to be confirmed and the registration request is discarded.

When the second state notice mode is selected, the state notice process is executed at a timing B in FIG. 9. Specifically, if the CPU 501 receives the address registration request from the mobile node 21 (step S201), the CPU 501 executes the validity check process to determine whether the address registration request is valid (step S202, S203). If it is determined that the address registration request is valid (YES in step S203), the CPU 501 executes the state notice process illustrated in steps S112 to S115 in FIG. 8. Then, the CPU 501 stores, in the binding list table 201, address information indicative of the relationship in correspondency between the care-of-address designated by the address registration request and the home address of the mobile node 21 (step S205). On the other hand, if it is not determined that the address registration request is valid (NO in step S203), the CPU 501 discards the address registration request (step S204). Neither the state notice process nor the address information registration process is executed.

In the second state notice mode, the execution timing of the state notice process delays, but an attack by falsification of the address registration request can be prevented. In an environment where the possibility of attack is high, stable communications can be realized.

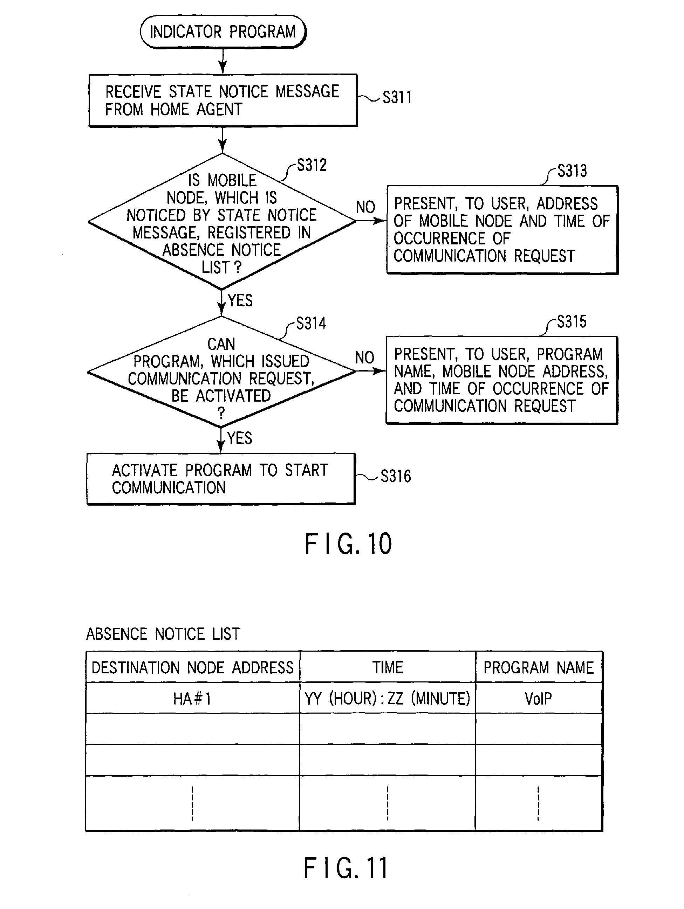

Next, referring to a flow chart of FIG. 10, a description is given of a process executed by the indicator program 701 provided in the node 31.

If the indicator program 701 receives the state notice message sent from the home agent 101 (step S311), it determines whether the home address of the mobile node 21 noticed by the state notice message is registered in an absence notice list managed by the indicator program 701 (step S312). The absence notice list is prepared based on the absence notice message received from the home agent 101, as mentioned above. Each time the indicator program 701 receives the absence notice message, the indicator program 701 registers in the absence notice list the home address of the destination mobile node, to which the node 31 sent the communication request, the time of the transmission of the communication request, and the name of the application program (e.g. VoIP application) that requested the transmission of the communication request, as shown in FIG. 11.

If the home address of the mobile node 21 noticed by the state notice message is not stored in the absence notice list (NO in step S312), the indicator program 701 causes the display of the node 31 to display the home address of the mobile node 21 noticed by the state notice message and the time of the communication request, thereby notifying the user of the node 31 that the mobile node 21 has become communicable (step S313).

On the other hand, if the home address of the mobile node 21 noticed by the state notice message is stored in the absence notice list (YES in step S312), the indicator program 701 determines whether the program registered in the absence notice list, that is, the program that issued the communication request, can be activated (step S314). If the program cannot be activated (NO in step S314), the indicator program 701 causes the display of the node 31 to display the home address of the mobile node 21, the time of the communication request and the name of the program that issued the communication request, which are stored in the absence notice list (step S315). If the program can be activated (YES in step S314), the indicator program 701 activates this program and informs this program of the home address of the mobile node 21, thereby retransmitting the transmission request that was previously sent (step S316). Thus, voice communications using the VoIP application can automatically be started in response to the reception of the state notice message.

As has been described above, the home agent can inform the node 31, which sent the communication request to the mobile node 21 that is not connected to the network, that the mobile node 21 has become communicable. Therefore, it is possible to increase the possibility that bidirectional communications can be performed between the mobile node 21 and the node 31.

The state notice scheme provided by the home agent 101 is applicable to, as well as applications for voice communications, general communications applications, such as online competition games and chats, which require simultaneous connection to the network of the participants in communications.

## Claims

1. A communication control apparatus for forwarding a communication request, which is directed to a home address of a mobile node (21) and is transmitted from another node via a network, to a network segment to which the mobile node (21) is currently connected, based on a relationship between the home address and a care-of-address used in the network segment, **characterized by** comprising:
means (306,202) for storing event information indicative of occurrence of the communication request from said another node to the mobile node (21), when the communication request is received in a state in which the mobile node (21) is not connected to the network; and
informing means (311) for executing, based on the stored event information, a process for informing said another node via the network that the mobile node (21) has become communicable, in response to a registration request for registration of the care-of-address, which is transmitted via the network from the mobile node connected to the network segment.

2. The communication control apparatus according to claim 1, **characterized by** further comprising means (309, 201) for storing the care-of-address of the mobile node (21) on the basis of the registration request for the care-of-address.

3. The communication control apparatus according to claim 1, **characterized in that** the event information includes an address of said another node that has transmitted the communication request.

4. The communication control apparatus according to claim 1, **characterized by** further comprising means (S202) for executing a validity check process for determining whether the registration request is valid, in response to the registration request for the care-of-address,
wherein the informing means (311) includes means for executing said process for informing, after the validity check process determines that the registration request is valid.

5. The communication control apparatus according to claim 1, **characterized by** further comprising means (S202) for executing a validity check process for determining whether the registration request is valid, in response to the registration request for the care-of-address,
wherein the informing means (311) includes means for executing said process for informing, before the validity check process is executed.

6. The communication control apparatus according to claim 1, **characterized by** further comprising means for informing the mobile node (21) via the network that the communication request directed to the mobile node (21) has been transmitted from said another node, based on the stored event information, in response to the registration request for the care-of-address.

7. The communication control apparatus according to claim 1, **characterized by** further comprising means (307) for informing, when the communication request, which is transmitted from said another node and directed to the home address, is received in a state in which the mobile node (21) is not connected to the network, said another node via the network that the mobile node (21) is not connected to the network and that when the mobile node (21) becomes communicable, this fact is to be noticed.

8. A method of forwarding, based on a relationship between a home address allocated to a mobile node (21) and a care-of-address used in a network segment at a destination of movement, to which the mobile node (21) is currently connected, a communication request, which is transmitted from another node via a network and directed to the home address, to the network segment at the destination of movement, **characterized by** comprising:
storing (S108), when the communication request, which is transmitted from said another node and directed to the home address, is received in a state in which the mobile node (21) is not connected to the network, event information indicative of occurrence of the communication request from said another node to the mobile node (21); and
executing (S114), based on the stored event information, a process for informing said another node via the network that the mobile node (21) has become communicable, in response to a registration request for registration of the care-of-address, which is transmitted via the network from the mobile node (21) connected to the network segment at the destination of movement.

9. The communication control method according to claim 8, **characterized by** further comprising storing (S116) the care-of-address of the mobile node (21) on the basis of the registration request.

10. The communication control method according to claim 8, **characterized in that** the event information includes an address of said another node that has transmitted the communication request.

11. The communication control method according to claim 8, **characterized by** further comprising executing (S202) a validity check process for determining whether the registration request is valid, in response to the registration request for the care-of-address,
wherein said executing (S114) of the process for informing includes executing said process for informing, after the validity check process determines that the registration request is valid.

12. The communication control method according to claim 8, **characterized by** further comprising executing (S202) a validity check process for determining whether the registration request is valid, in response to the registration request for the care-of-address,
wherein said executing (S114) of the process for informing includes executing said process for informing, before the validity check process is executed.

13. The communication control method according to claim 8, **characterized by** further comprising informing (S115) the mobile node (21) via the network that the communication request directed to the mobile node (21) has been transmitted from said another node, based on the stored event information, in response to the registration request for the care-of-address.

14. The communication control method according to claim 8, **characterized by** further comprising informing (S109), when the communication request, which is transmitted from said another node and directed to the home address, is received in a state in which the mobile node (21) is not connected to the network, said another node via the network that the mobile node (21) is not connected to the network and that when the mobile node (21) becomes communicable, this fact is to be noticed.
